# EUROPEAN PATENT APPLICATION

(11) **EP 0 936 163 A1**
(43) Date of publication of application: **18.08.1999**
(21) Application number: 99102614.7
(22) Date of filing: 11.02.1999
(51) Int. Cl.: B65G 47/84, B65B 19/22

(54) **Method of transferring articles**

(30) Priority: 13.02.1998 IT BO980076
(71) Applicant: G.D SOCIETA' PER AZIONI, I-40133 Bologna (IT)
(72) Inventor: Spatafora, Mario, 40100 Bologna (IT); Tale', Fabrizio, 40100 Bologna (IT)
(74) Representative: Jorio, Paolo

(57) **Abstract**

A method of transferring articles (3), in particular, packets of cigarettes, whereby each article (3) is transferred from a first seat (8) on a first wheel (2) to a second seat (9) on a second wheel (5), and whereby the two wheels (2, 5) rotate in opposite directions about respective axes (7, 5a) parallel to each other; during transfer, the two seats (8, 9) are maintained aligned with each other in a direction (D) which varies, during transfer, by oscillating about an intermediate direction (48) perpendicular to the two axes (7, 5a).

## Description

The present invention relates to a method of transferring articles.

The present invention may be used to advantage, in particular, in the packing industry, for continuously transferring substantially parallelepiped packets from one rotary conveying device - e.g. a conveyor wheel - to another.

In the following description of the present invention, reference is made purely by way of example to the packing industry, and in particular to continuously-operated cigarette packing machines.

In the packing industry, devices are used for continuously transferring parallelepiped packets from a first to a second conveyor wheel. Known devices of this sort, such as those described in US Patent No. 4,511,027, British Patent No. 1,316,933 and German Patent No. 4,012,114, all feature seats, for the packets, on both the first and second wheel, and actuating devices for moving the seats on at least one of the wheels in a substantially radial direction, so that the path traveled by each seat on the first wheel and the path traveled by a corresponding seat on the second wheel are parallel to each other over a given distance extending about a given transfer zone.

Especially when engaged by respective packets, the above radial movement of the seats results in a variation in the moment of inertia of the respective wheel and, therefore, in vibration, which may become unacceptably severe in the event the wheel is rotated at high speed. Moreover, radial displacement of the seats is normally effected using radial guides and complex high-cost radial actuators, which also contribute significantly towards dynamically unbalancing the respective wheels.

In an attempt to eliminate the above drawbacks, a transfer device has been proposed, e.g. in US Patent No. 4,823,536 or in EP Patent No. 509,293, in which, at a given transfer zone, the seats on the two wheels are maintained facing and parallel to each other and to a fixed direction - in particular, a direction perpendicular to the respective axes of rotation of the wheels - by moving, in particular oscillating, the seats continuously with respect to the respective wheels.

To keep the two seats - between which a respective packet is to be transferred - parallel to said direction throughout transfer, the first and second seats must necessarily be arranged with the same spacing about the respective wheel axes, and a precise relationship must be established between the angular speeds of the two wheels.

In other words, though highly efficient, the above known transfer device is fairly rigid dynamically.

It is an object of the present invention to provide method of transferring articles from a first seat on a first wheel to a corresponding second seat on a second wheel, the method comprising the steps of rotating the first and the second wheel in opposite directions and respectively about a first and a second axis parallel to each other; maintaining said two seats aligned with each other for a given alignment time and in a given alignment direction by imparting to at least one of said two seats solely an oscillation movement with respect to the relevant wheel about an axis moving with, and fixed in relation to, the relevant wheel; and transferring a respective article from one seat to the other at an instant within said alignment time; characterized in that, during the alignment time, said alignment direction is varied about an intermediate direction perpendicular to the first and second axes.

A non-limiting embodiment of the present invention will be described by way of example with reference to the accompanying drawings, in which:
Figure 1 shows a schematic partial front view, with parts removed for clarity, of a preferred embodiment of a machine implementing the method according to the present invention;
Figure 2 shows a larger-scale schematic view in perspective of a first detail in Figure 1;
Figure 3 shows a larger-scale schematic view in perspective of a second detail in Figure 1.

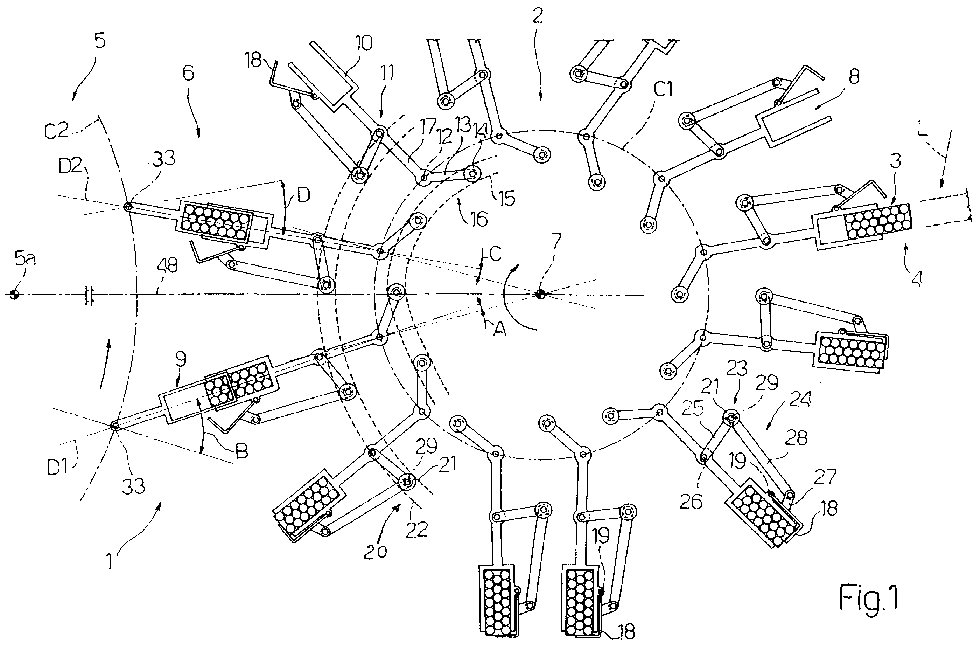

Number 1 in Figure 1 indicates a continuous packing machine comprising a supply wheel 2 for transferring a series of substantially parallelepiped articles 3 (defined, in the example shown, by groups of cigarettes packed in sheets of foil) from a packing line L cooperating with supply wheel 2 at a loading station 4, to a packing wheel 5 cooperating with supply wheel 2 at an unloading station 6.

Supply wheel 2 is powered to rotate continuously (clockwise in Figure 1) about a respective axis 7 perpendicular to the Figure 1 plane, and comprises a number of equally spaced peripheral seats 8, each for receiving a respective article 3. Packing wheel 5 is coplanar with and adjacent to supply wheel 2, is powered to rotate continuously (anticlockwise in Figure 1) about a respective axis 5a parallel to axis 7, and comprises a number of equally spaced peripheral seats 9, each for receiving a respective article 3 from a corresponding seat 8 of supply wheel 2.

Supply wheel 2 carries a number of C-shaped supporting elements 10, each defining a respective seat 8. Supporting elements 10 are distributed about axis 7, and are connected to supply wheel 2 via the interposition of respective rocker arms 11, each of which is hinged to supply wheel 2 to oscillate, with respect to supply wheel 2, about an axis 12 parallel to axis 7; and the hinge axes 12 of rocker arms 11 are equally spaced about supply wheel 2 along a circle C1 coaxial with axis 7.

Each rocker arm 11 comprises a first arm 13 extending towards axis 7 and fitted on the free end with a tappet roller 14 engaging a fixed cam 15 defining, with roller 14, a control device 16 for controlling the angular position of rocker arm 11 about respective axis 12; and a second arm 17 extending outwards of supply wheel 2 and fitted on the free end with a respective supporting element 10.

Each supporting element 10 comprises an L-shaped lid 18, which is hinged at one end to supporting element 10 and is rotated about a respective axis 19, parallel to axis 7, by a control device 20 comprising a tappet roller 21, which engages a fixed cam 22 and acts on lid 18 via a crank mechanism 23 forming part of control device 20. Crank mechanism 23 is defined by an articulated parallelogram 24, which comprises a first crank 25 hinged to respective arm 17 to rotate about an axis 26 parallel to axis 7, a second crank 27 defined partially by lid 18 and hinged to respective supporting element 10 to rotate about axis 19, and a connecting rod 28 connecting cranks 25 and 27. Tappet roller 21 is fitted to a pin connecting crank 25 to connecting rod 28, so as to rotate about an axis 29 parallel to axis 7.

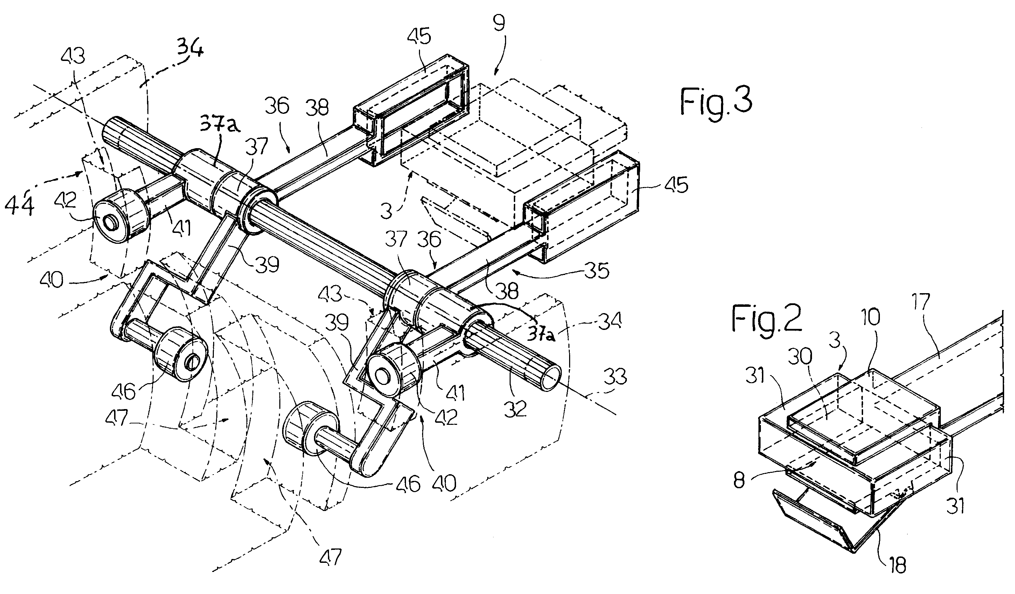

As shown more clearly in Figure 2, each article 3 is substantially parallelepiped, and comprises a central portion 30, and two opposite longitudinal ends 31; each seat 8 is so formed as to engage central portion 30 of respective article 3; and lid 18 is rotated by control device 20 between an open position (Figure 2) - in which article 3 may be inserted into or extracted from respective seat 8 in a radial direction with respect to supply wheel 2 - and a closed position.

As shown in Figure 3, each seat 9 is associated with a respective pin 32 having an axis 33 parallel to axis 5a of packing wheel 5, and supported at opposite ends by two end plates 34 forming part of, and perpendicular to the axis of, packing wheel 5. Each seat 9 is defined by a respective gripping device 35 for engaging longitudinal ends 31 of a respective article 3, and which comprises two rocker arms 36, each of which is hinged about axis 33 and, in turn, comprises a central sleeve 37 fitted in rotary and axially-sliding manner to pin 32, and two arms 38 and 39 extending radially from sleeve 37. The hinge axes 33 of the various rocker arms 36 are distributed about packing wheel 5 along a circle C2 coaxial with axis 5a of packing wheel 5.

The angular and axial positions of each sleeve 37 are controlled by a respective actuating and control device 40, which comprises a sleeve 37a fitted in rotary and axially-sliding manner to pin 32 and contacting sleeve 37. An arm 41 projects radially from sleeve 37a, and is fitted on the free end with a tappet roller 42 rotating about a respective axis perpendicular to axis 33, and engaging a track 43 of a fixed cam 44 located between plates 34 and forming part of device 40. Device 40 also comprises known elastic members (not shown) for maintaining contact between each sleeve 37 and respective sleeve 37a. Track 43 extends about axis 5a of packing wheel 5 to control the axial position of sleeve 37 along pin 32 alongside variations in the angular position of seat 9 about axis 5a of packing wheel 5. Each arm 38 is fitted on the free end with a respective cup-shaped half-shell 45, which is positioned facing the half-shell 45 on arm 38 of the other rocker arm 36 to define respective seat 9, and which provides for receiving a respective longitudinal end 31 of respective article 3.

In addition to sleeve 37a, arm 41, roller 42 and track 43 of cam 44, actuating and control device 40 of each sleeve 37 also comprises a tappet roller 46 fitted in rotary manner to the free end of arm 39 to rotate about a respective axis, parallel to axis 33, inside a respective track 47. Track 47 is formed on cam 44, and extends about axis 5a of packing wheel 5 to control the angular position of sleeve 37 about axis 33 of pin 32 alongside variations in the angular position of seat 9 about axis 5a.

Track 43 of cam 44 is so formed that, as packing wheel 5 rotates about axis 5a, the two rocker arms 36 of each seat 9 are moved, along axis 33 of respective pin 32, between a position opening respective gripping device 35 - wherein the two half-shells 45 are separated by a distance greater than the length of a respective article 3 - and a position closing respective gripping device 35 - wherein the two half-shells 45 define respective seat 9 and provide for gripping and retaining a respective article 3.

Track 47 of cam 44 is so formed that, as packing wheel 5 rotates about axis 5a, the two rocker arms 36 of each seat 9 are rotated, about axis 33 of respective pin 32, between said opening position (Figure 3) - wherein respective gripping device 35, traveling with packing wheel 5 along a substantially circular path through unloading station 6, receives a respective article 3 from supply wheel 2 - and said closing position (not shown) - wherein respective gripping device 35 retains respective article 3 received from supply wheel 2.

Operation of machine 1 will now be described with reference to one pair of corresponding seats 8 and 9, and as of the instant in which supply wheel 2, rotating about respective axis 7, brings seat 8 into loading station 4.

Upstream from loading station 4, lid 18 of seat 8 is moved into the open position by control device 20 to enable seat 8 to receive, in known manner at loading station 4, a respective article 3 from packing line L; and, once article 3 is loaded, control device 20 moves lid 18 into the closed position to retain article 3 inside seat 8 in opposition to the centrifugal force produced by the rotation of supply wheel 2.

As supply wheel 2 rotates, seat 8 is then fed from loading station 4 to unloading station 6, to which the corresponding seat 9 is also fed at the same time by the rotation of packing wheel 5.

At unloading station 6, seats 8 and 9 are kept aligned with each other for a given time interval - defined as alignment time - in a given direction D, two successive operating instants of which are indicated in Figure 1 by D1 and D2. During the alignment time, direction D varies about an intermediate direction 48 perpendicular to axis 7 of supply wheel 2 and to axis 5a of packing wheel 5; and article 3 is transferred from seat 8 to seat 9 during the alignment time.

Since supply wheel 2 and packing wheel 5 rotate continuously, seats 8 and 9 are kept aligned with each other by each seat moving continuously with respect to the respective supporting wheel. More specifically, during the alignment time, seat 8 performs a continuous oscillation with respect to supply wheel 2 about respective axis 12, and seat 9 performs a continuous oscillation with respect to packing wheel 5 about respective axis 33.

In the preferred embodiment shown in Figure 1, as seats 8 and 9 near unloading station 6, control device 16 rotates seat 8 about respective axis 12 in the opposite direction to the rotation direction of wheel 2, and control devices 40 rotate seat 9 about respective axis 33 in the same direction as the rotation direction of wheel 5. As a consequence of the above rotations, on reaching the input of unloading station 6, seats 8 and 9 are aligned with each other in direction D1, which is inclined with respect to direction 48 and forms a delay angle A with a radial line through the center of wheel 2 and respective axis 12, and an advance angle B with a radial line through the center of wheel 5 and respective axis 33.

Once aligned, seats 8 and 9 are kept in line with each other by rotating about respective axes 12 and 33, so that, on reaching the output of unloading station 6, seats 8 and 9 are aligned in direction D2, which is inclined with respect to direction 48 and forms a delay angle C with a radial line through the center of wheel 2 and respective axis 12, and a delay angle D with a radial line through the center of wheel 5 and respective axis 33.

As alignment is being maintained, direction D slopes less and less with respect to direction 48 until the two eventually coincide, and then begins to slope in the opposite direction with respect to direction 48.

The rotation of respective wheel 2, 5 about respective axis 7, 5a, combined with rotation of seat 8, 9 about respective axis 12, 33, causes seat 8, 9 to move substantially in direction D with respect to seat 9, 8, so that seats 8 and 9 are first moved towards each other into a minimum-distance position - in which seats 8 and 9 interpenetrate substantially completely, and which is reached when direction D coincides with direction 48 - and then away from each other to disengage.

Article 3 is transferred from seat 8 to seat 9 in the minimum-distance position, when seats 8 and 9 interpenetrate substantially completely. As shown in Figure 3, article 3 is at no time left unsupported during transfer. On the contrary. Since seat 8 engages central portion 30 and seat 9 longitudinal ends 31 of article 3, article 3 is at one point retained simultaneously by both seats 8 and 9.

Before interpenetration commences, half-shells 45 of seat 9 are moved into the open position to permit insertion of article 3; and, during interpenetration, lid 18 of seat 8 is moved into the open position to permit release of article 3. In the minimum-distance position, half-shells 45 are moved into the closed position to engage article 3, and, as seats 8 and 9 are parted after the minimum-distance position is reached, seat 8 is gradually disengaged from article 3 to complete transfer.

In an alternative embodiment not shown, only one of the two seats is moved with respect to the relative wheel, while the other is maintained, with respect to the relative wheel, in a fixed angular position.

In other embodiments not shown, the seats on the two wheels may be formed differently, as described, for example, in US Patent No. 4,823,536.

## Claims

1. A method of transferring articles (3) from a first seat (8) on a first wheel (2) to a corresponding second seat (9) on a second wheel (5), the method comprising the steps of rotating the first (2) and the second (5) wheel in opposite directions and respectively about a first (7) and a second (5a) axis parallel to each other; maintaining said two seats (8, 9) aligned with each other for a given alignment time and in a given alignment direction (D); and transferring a respective article (3) from one seat (8, 9) to the other at an instant within said alignment time; characterized in that, during the alignment time, said alignment direction (D) is varied with respect to an intermediate direction (48) perpendicular to the first and second axes (7, 5a).

2. A method as claimed in Claim 1, characterized in that said seats (8, 9) are maintained aligned with each other, during said alignment time, by imparting to at least one of said two seats (8, 9) a movement with respect to the relative wheel (2, 5).

3. A method as claimed in Claim 1, characterized in that said seats (8, 9) are maintained aligned with each other, during said alignment time, by imparting to each of said two seats (8, 9) a movement with respect to the relative wheel (2, 5).

4. A method as claimed in Claim 2 or 3, characterized in that, for each said seat (8, 9), said movement comprises an approach movement and a subsequent withdrawal movement of the seat (8, 9) with respect to the other seat (9, 8), with at least partial interpenetration of said two seats (8, 9).

5. A method as claimed in Claim 4, characterized in that said transfer is made in a maximum-interpenetration position of said two seats (8, 9).

6. A method as claimed in Claim 4 or 5, characterized in that, in said maximum-interpenetration position, said first (8) and second (9) seats interpenetrate substantially completely.

7. A method as claimed in any one of the foregoing Claims from 4 to 6, characterized in that, in said maximum-interpenetration position, said alignment direction (D) is parallel to said intermediate direction (48).

8. A method as claimed in any one of the foregoing Claims from 2 to 7, characterized in that, for each said seat (8, 9), said movement is achieved by rotating the seat (8, 9) about an axis (12, 33) moving with the respective wheel (2, 5) and parallel to said first (7) and second (5a) axes.

9. A method as claimed in Claim 8, characterized in that, for each said seat (8, 9), said movement comprises at least a rotation in the opposite direction to the rotation direction of the relative wheel (2, 5).

10. A method as claimed in any one of Claims 1 to 9, characterized in that said seats (8, 9) are defined in respective peripheral supporting elements (10, 35) distributed about the respective peripheries of said wheels (2, 5).

11. A method as claimed in any one of Claims 1 to 10, wherein said article (3) is substantially parallelepiped, and comprises a central portion (30) and two longitudinal ends (31); each said first seat (8) being activated to retain a respective said article (3) by engaging the central portion (30) of the article; and each said second seat (9) being activated to retain a respective said article (3) by engaging the longitudinal ends (31) of the article.

12. A method as claimed in one of Claims 1 to 11, wherein each said wheel (2, 5) rotates substantially continuously about the respective said axis (7, 5a).

13. A method as claimed in any one of Claims 1 to 12, wherein said articles (3) are packets, in particular, packets of cigarettes.
